# EUROPEAN PATENT APPLICATION

(11) **EP 4 685 495 A1**
(43) Date of publication of application: **28.01.2026**
(21) Application number: 24774486.5
(22) Date of filing: 07.02.2024
(51) Int. Cl.: G01N 35/10

(54) **AUTOMATIC ANALYSIS DEVICE**

(30) Priority: 22.03.2023 JP 2023045188
(71) Applicant: HITACHI HIGH-TECH CORPORATION, Tokyo 105-6409 (JP)
(72) Inventor: MIYAMOTO, Shunsuke, Tokyo 105-6409 (JP); MIYAKE, Masafumi, Tokyo 105-6409 (JP); MIYAKAWA, Takushi, Tokyo 105-6409 (JP); RAHMA, Hutami Rahayu, Tokyo 105-6409 (JP)
(74) Representative: Strehl & Partner mbB
(86) International application number: PCT/JP2024/004207
(87) International publication number: WO 2024/195340

(57) **Abstract**

An automatic analyzer 10 includes: an analysis unit 11; a water supply unit 12 including a water supply tank 115, and a water supply pump 114 for supplying the liquid held in the water supply tank to the analysis unit; and a computer 118 for controlling the analysis unit and the water supply unit, wherein the water supply unit includes a return channel 117 branched from the channel between the water supply pump and the analysis unit, and connected to the water supply tank, and after detergent is put into the water supply tank, the computer mixes the water in the water supply tank with the detergent by blocking liquid supply from the channel to a mechanism of the analysis unit to return the liquid supplied from the water supply pump through the return channel to the water supply tank. There is provided an automatic analyzer capable of reducing user involvement in channel cleaning maintenance.

## Description

### Technical Field

The present invention relates to an automatic analyzer configured to perform a quantitative/qualitative analysis of a bio-sample such as blood and urine.

### Background Art

The automatic analyzer is a measurement device that quantitatively/qualitatively analyzes components of the bio-sample (hereinafter referred to as a sample) such as a serum and urine utilizing an optical/electrical analysis method. In one of measurement methods, a sample is reacted with a reagent, and a color tone, change in turbidity, and light emission resulting from the reaction are optically measured by a photometric unit such as a spectrophotometer so that the component of the sample is analyzed.

As one type of automatic analyzers, a flow type automatic analyzer includes a channel and a liquid supply mechanism such as a pump. The flow type automatic analyzer quantitatively dispenses the sample and the reagent from the sample container and the reagent container into the reaction container by a syringe pump or the like, utilizing change in water volume. If a stain and clogging exist in the channel, they will narrow or block the channel to deteriorate the dispensing accuracy of the syringe pump.

In order to remove and prevent generation of mold and biofilm as a cause of the stain and clogging, it is effective to circulate the cleaning liquid through the channel. For this, an operator of the automatic analyzer, or a service person regularly performs maintenance for cleaning the inside of the channel using the cleaning liquid (hereinafter referred to as a channel cleaning maintenance).

Patent Literature 1 discloses the automatic analyzer configured to securely clean the nozzle using a large amount of cleaning water quickly to allow the highly accurate analysis of the sample liquid. As disclosed in Patent Literature 1, the nozzle and the channel are cleaned by supplying water held in the water supply tank to the nozzle.

### Citation List

### Patent Literature

Patent Literature 1: Japanese Unexamined Patent Application Publication No. Hei 6-130072

### Summary of Invention

### Technical Problem

Patent Literature 1 discloses no description about the use of high-capacity cleaning liquid (for example, alkaline detergent) for the cleaning operation. When performing the channel cleaning using the cleaning liquid in the configuration as disclosed in Patent Literature 1, it is necessary to perform the operation for draining water in the water supply tank, and putting the concentration-adjusted cleaning liquid into the water supply tank. The cleaning operation using the high-capacity cleaning liquid may cause the risk of making the operator a disaster victim. Accordingly, in most cases, an experienced service person is commissioned for the cleaning operation.

In recent years, however, because of the need to reduce the transportation cost and deficient resources, reduction in frequency of visiting the site by the service person for the system maintenance has been required. Efforts of automatization or simplification of the maintenance operation have been underway.

It is an object of the present invention to provide an automatic analyzer that simplifies the channel cleaning maintenance which has been conventionally operated by the service person to the level that enables the system user (operator) to safely perform such maintenance operation by configuring the system that allows the channel cleaning operation using automatically prepared cleaning liquid with suitably adjusted concentration.

### Solution to Problem

The automatic analyzer according to an embodiment of the present invention includes an analysis unit, a water supply unit that includes a water supply tank and a water supply pump for supplying a liquid held in the water supply tank to the analysis unit, and a computer for controlling the analysis unit and the water supply unit. The water supply unit includes a return channel that is branched from the channel between the water supply pump and the analysis unit, and connected to the water supply tank. After detergent is put into the water supply tank, the computer mixes the water in the water supply tank with the detergent by blocking liquid supply from the channel to a mechanism of the analysis unit to return the liquid supplied from the water supply pump to the water supply tank through the return channel.

### Advantageous Effects of Invention

Provided is the automatic analyzer configured to allow reduction in the involvement of the user in the channel cleaning maintenance. Other problems and new characteristics will be clarified by the description of the specification and the accompanying drawings.

### Brief Description of Drawings

Fig. 1 is a schematic configuration diagram illustrating an example of an automatic analyzer of First embodiment.
Fig. 2 is a schematic configuration diagram illustrating an example of a water supply unit.
Fig. 3 is an example of an operation flow of channel cleaning maintenance.
Fig. 4 is an example of termination processing when a sensor abnormality or water supply abnormality occurs.
Fig. 5 is a schematic configuration diagram illustrating an example of the water supply unit.
Fig. 6 is an example of an operation flow (part) of the channel cleaning maintenance.
Fig. 7 is a schematic configuration diagram illustrating an example of an automatic analyzer of Second embodiment.
Fig. 8 is a schematic configuration diagram illustrating an example of a water supply unit.
Fig. 9 is an example of an operation flow of channel cleaning maintenance.

### Description of Embodiments

Embodiments of the present invention will be described in detail with reference to the drawings. In all the drawings for illustrating the embodiment, components each having the identical function are designated with the identical codes.

### First Embodiment

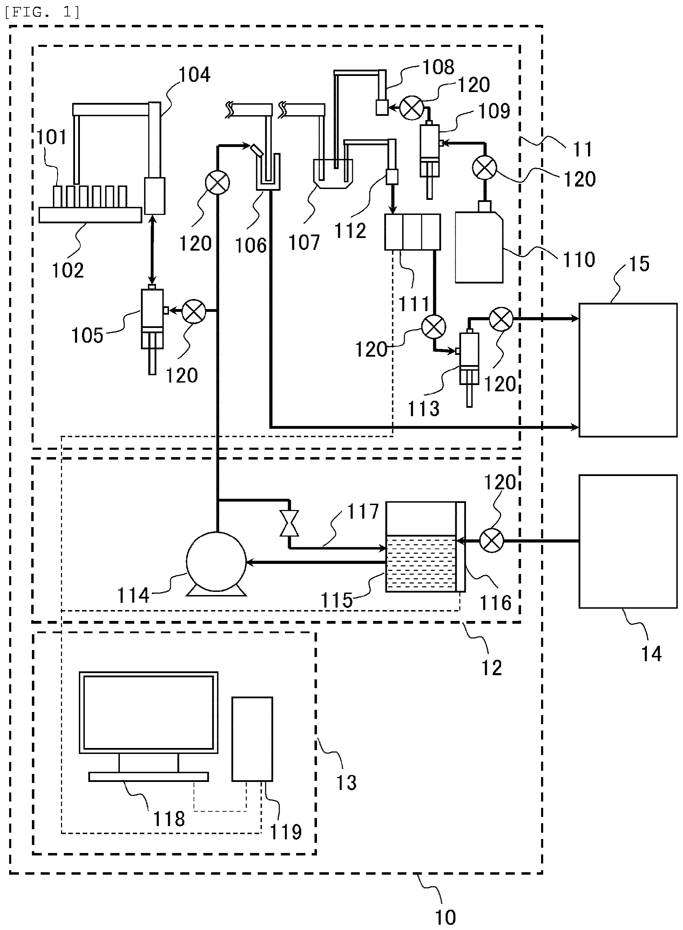

FIG. 1 is a schematic configuration diagram illustrating an example of an automatic analyzer to which the embodiment is applied. An automatic analyzer 10 includes an analysis unit 11, an water supply unit 12 and an operation unit 13. A water supply equipment 14 and a waste liquid equipment 15 are provided outside the automatic analyzer 10.

The analysis unit 11 includes a sample disk (sample disk) 102 having a plurality of blood collection tubes (sample containers) 101 each for holding a sample mounted thereon, a dilution tank 107 for diluting the sample, a probe (sample probe) 104 for dispensing the sample aspirated from the blood collection tube 101 into the dilution tank 107, a sample syringe pump 105 connected to the sample probe 104 for aspirating and discharging liquid, and a nozzle cleaning mechanism 106 for cleaning the outside of the nozzle of the sample probe 104.

The analysis unit 11 further includes a reagent probe 108 for discharging the reagent into the dilution tank 107, a reagent syringe pump 109 for aspirating and discharging the reagent, a reagent bottle 110 for holding the reagent, an electrode unit 111 for measuring each ion concentration of the sample and the reagent, a measurement probe 112 for aspirating a reaction liquid generated by reaction between the sample and the reagent from the dilution tank 107, and a measurement syringe pump 113 for aspirating the reaction liquid from the electrode unit 111, and discharging the reaction liquid into the waste liquid equipment 15.

The water supply unit 12 includes a water supply pump 114 for supplying water to the sample syringe pump 105 and the nozzle cleaning mechanism 106, a water supply tank 115 for holding water supplied from the water supply equipment 14 by a fixed amount, a water level monitoring unit 116 for monitoring the water level in the water supply tank 115, and a return channel 117 having a function of returning water supplied from the water supply pump 114 into the water supply tank 115. The return channel 117 is a channel having an aperture provided in the middle of the channel for reducing a pipe diameter.

The analysis unit 11 and the water supply unit 12 include solenoid valves 120 for controlling the flow direction of the channel.

The operation unit 13 includes a computer 118 that controls entire operations of the automatic analyzer, and performs data exchange with the outside, and a controller 119 that transmits a control signal to each unit of the analysis unit 11 and the water supply unit 12 in accordance with an instruction from the computer 118.

The computer 118 includes: a display unit for displaying various screens such as measurement request items and measurement results; an input unit for inputting various parameters, settings, a start/stop of the analysis, and the like based on the operation screen displayed on the display unit; a recording unit for recording data necessary for operating the respective units, including timing charts, operation parameters, analytical results, various information on a sample, dilute solution, reagent, cleaning liquid, measurement results, and the like; and a computing processing unit for controlling the device, and calculating the component concentration of a measurement object. The computing processing unit executes the control for outputting instructions to operate the respective units in the analysis unit 11 and the water supply unit 12 to the controller 119 based on the information input via the input unit or the controller 119, and executes analytical processing for calculating the component concentration of the measurement object from the physical quantity such as voltage values measured by the electrode unit 111. The computing processing unit may be configured to perform the processing through execution of the program, or provided with dedicated hardware for executing the specific processing.

FIG. 1 illustrates only control lines between the controller 119 and the electrode unit 111, and between the controller 119 and the water level monitoring unit 116. Actually, however, the controller 119 is communicably connected to the respective units of the analysis unit 11 and the water supply unit 12, which are controlled by the operation unit 13.

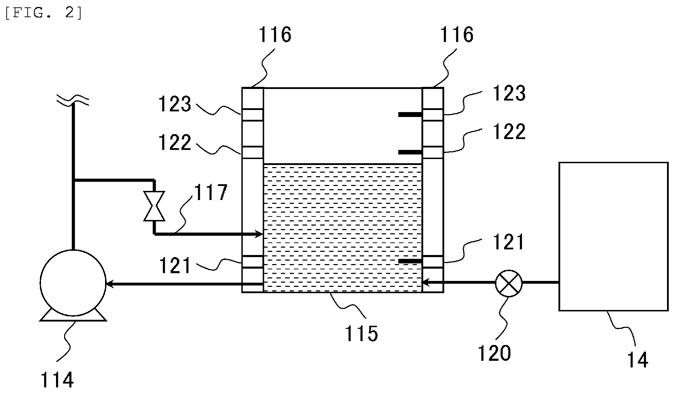

Fig. 2 illustrates an example of the water supply unit 12. The water level monitoring unit 116 includes three light transmission type sensors of a lower limit point sensor 121, an upper limit point sensor 122, and an overflow sensor 123. In this example, each of the light transmission type sensors includes a light source and a light receiver, and detects existence of water based on a light receiving amount, detected by the light receiver, from the light source. The lower limit point sensor 121 detects an abnormal state that the water consumption exceeds the water supply amount, indicating the case that water is not normally supplied to the water supply tank 115. The upper limit point sensor 122 detects completion of the required amount of water supplied to the water supply tank 115. The overflow sensor 123 detects an abnormal state that water is supplied to the water supply tank 115, exceeding over the position (water supply completion position) of the upper limit point sensor 122. The grouped sensors of the water level monitoring unit 116 are placed at different height positions so that the liquid volume of the water supply tank 115 becomes a predetermined volume when those sensors sense the respective liquid surfaces. The detection information of the grouped sensors of the water level monitoring unit 116 is integrated to allow determination with respect to the water supply state in the water supply tank 115. The solenoid valves 120 for water supply from the water supply equipment 14 to the water supply tank 115 are controlled based on the water supply state of the water supply tank 115, which is determined with reference to the detection information of the grouped sensors of the water level monitoring unit 116.

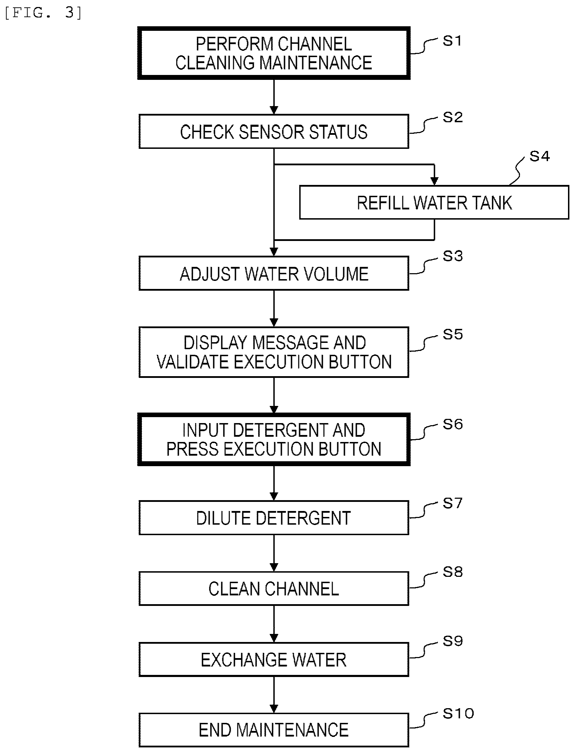

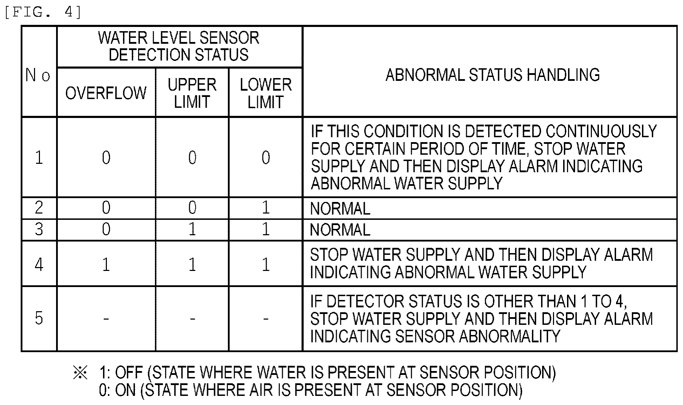

Fig. 3 shows an operation flow of a channel cleaning maintenance. Fig. 4 shows the respective sensor statuses of the water level monitoring unit 116 as illustrated in Fig. 2, and an example of termination processing to be performed in response to abnormality in the sensor or the water supply. In the operation flow as shown in Fig. 3, steps (S1, S6) each bordered by a thick line frame are operations involved by the operator. Other steps indicate operations to be performed by the computing processing unit of the computer 118. Fig. 3 omits the description with respect to the operation terminating flow to be performed in the abnormal status.

The operator inputs an instruction to perform the channel cleaning maintenance from the input unit of the computer 118 (S1).

In response to the instruction to perform the channel cleaning maintenance, the computer 118 checks the sensor status of the water level monitoring unit 116 (S2). If it is determined, from the sensor status, that abnormality occurs in the water supply or the sensor, the termination processing as shown in Fig. 4 is performed.

If the water level is sensed by the lower limit point sensor 121 and the upper limit point sensor 122, but not sensed by the overflow sensor 123, the computer 118 operates the water supply pump 114, and the solenoid valve 120 connected from the water supply pump 114 to the nozzle cleaning mechanism 106 for a predetermined period of time for draining. As a result, the water volume in the water supply tank 115 holding water that reaches the position of the upper limit point sensor 122 before start of the operation is adjusted to the one suitable for diluting detergent (S3).

Meanwhile, if the upper limit point sensor 122 does not sense the water level, the computer 118 opens the solenoid valve 120 between the water supply equipment 14 and the water supply tank 115 to supply water to the water supply tank 115. At a time point when the upper limit point sensor 122 senses the water level, the solenoid valve 120 between the water supply equipment 14 and the water supply tank 115 is closed (S4). The process then proceeds to step S3.

After adjusting the water volume (S3), the computer 118 displays the message, for example, "Water volume adjustment is completed. Put detergent into water supply tank." on the display unit. Then a "Completion of putting detergent" button (execution button) is validated (S5).

The operator puts a specified amount of detergent into the water supply tank 115 from the detergent bottle, and presses the "Completion of putting detergent" button (execution button) (S6).

When the execution button is pressed, the computer 118 activates the water supply pump 114. The water supply pump 114 supplies water in a blocked state where all the solenoid valves 120 in the analysis unit 11 are closed. The detergent and water are mixed as they are circulated through the return channel 117 without being supplied to the analysis unit 11. As a result, the detergent is automatically diluted, and the detergent concentration is made uniform (S7). The aperture provided for the return channel 117 makes the piping resistance high. In the case where at least one of the solenoid valves 120 in the analysis unit 11 is opened, the water supply pump 114 does not supply water to the return channel 117. Meanwhile, in the case where all the solenoid valves 120 in the analysis unit 11 are closed, the water supply pump 114 supplies water to the return channel 117. As described above, the return channel 117 with the aperture allows a simplified channel switching operation, and the cost reduction.

After the elapse of a predetermined time from start of step S7, the computer 118 opens the solenoid valves 120 that block the channels connected from the water supply pump 114 to the sample probe 104, and to the nozzle cleaning mechanism 106. As a result, the cleaning liquid is supplied to the sample probe 104 and the nozzle cleaning mechanism 106 for cleaning the channel (S8). At this time, the sample probe 104 is placed at a position of the nozzle cleaning mechanism 106. The cleaning liquid supplied to the sample probe 104 and the nozzle cleaning mechanism 106 is discharged to the waste liquid equipment 15 through a waste liquid channel of the nozzle cleaning mechanism 106.

A liquid replacement operation for replacing the cleaning liquid with water in the channel is performed (S9). The computer 118 opens the solenoid valve 120 between the water supply equipment 14 and the water supply tank 115 to start water supply to the water supply tank 115. At this time, for example, the water supply by opening the solenoid valve 120 is not performed in the state where the water level reaches the upper limit point sensor 122, but performed only in the state where the water level does not reach the upper limit point sensor 122. The operation for replacement with water is performed for a period of time sufficient to remove the cleaning liquid in the channel.

After completion of the replacement with water, the computing processing unit of the computer 118 closes the solenoid valve 120 between the water supply equipment 14 and the water supply tank 115 to stop the water supply to the water supply tank 115. The message "Completion of channel cleaning maintenance" is displayed on the display unit, and the maintenance operation ends (S10).

The operator is only required to put a preliminarily prepared detergent bottle filled with a specified amount of detergent into the water supply tank 115. This allows omission of an operation for adjusting the detergent concentration as required for the generally employed channel cleaning maintenance. It is not necessary to prepare the cleaning liquid with concentration adjusted to be suitable for the channel cleaning by the amount required for the channel cleaning, thus contributing to space saving.

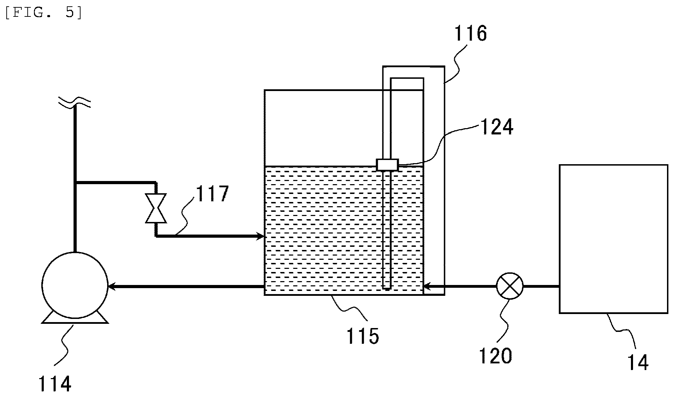

This embodiment exemplifies the configuration in which the water level monitoring unit 116 includes the three light transmission type sensors. The number of the sensors, and the detection system thereof are not limited to those described above. An example of the water level monitoring unit 116 provided with a float type water level sensor will be described. Fig. 5 illustrates an example of the water supply unit 12 provided with a float type water level sensor 124.

The float type water level sensor 124 detects the liquid surface by sensing a position of a float floating on the liquid surface of the water supply tank 115. The use of the float type water level sensor 124 allows quantitative monitoring of water volume in the water supply tank 115. It is therefore possible to perform operations more efficiently for confirming the water level state, water tank refilling, and the water volume adjustment as performed in steps S2 to S4 in the operation flow of the channel cleaning maintenance as shown in Fig. 3.

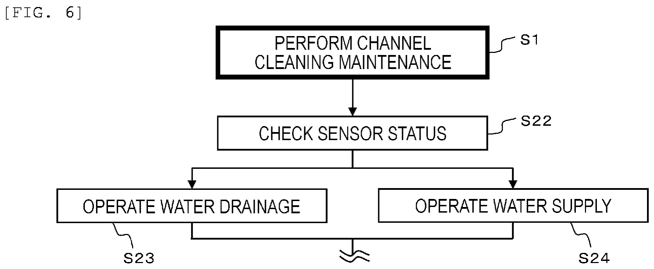

Fig. 6 shows an example of the operation flow from the channel cleaning maintenance to completion of the water volume adjustment (steps S1 to S4 in the operation flow in Fig. 3) as a part of the operation flow of the channel cleaning maintenance when using the float type water level sensor 124. The subsequent steps are the same as those in the operation flow as shown in Fig. 3.

After the operator gives an instruction to perform the channel cleaning maintenance (S1), the computer 118 checks the sensor status of the float type water level sensor 124 (S22).

In the case of excessive water volume in the water supply tank 115, the computer 118 operates the water supply pump 114, and the solenoid valve 120 connected from the water supply pump 114 to the nozzle cleaning mechanism 106 to drain water until the float sensor reaches a predetermined water level (S23).

Meanwhile, in the case of deficient water volume in the water supply tank 115, the computer 118 opens the solenoid valve 120 between the water supply equipment 14 and the water supply tank 115 to supply water to the water supply tank 115 until the float sensor reaches the predetermined water level (S24).

This makes it possible to omit the operation (S3) for confirming whether the water level has reached the upper limit point sensor 122 once, which is required for performing the operation flow when using the light transmission type sensor as shown in Fig. 3. The float type water level sensor 124 allows constant monitoring of the liquid volume in the water supply tank 115. It is therefore possible to confirm whether the appropriate amount of detergent has been put by the operator in the detergent putting operation (S6). This makes it possible to prevent defective channel cleaning maintenance caused by deficient or excessive detergent owing to an operational error in the detergent putting operation.

### Second Embodiment

A second embodiment exemplifies a configuration which ensures confirmation that there is no residual detergent in the channel after the channel cleaning maintenance. In step S9 of the operation flow in Fig. 3, the operation for replacement with water is performed for a period of time sufficient to wash the cleaning liquid away from the channel. The operation may cause the risk of excessive use of water and prolonged period of the maintenance time. The second embodiment is configured to optimize the replacement with water (S9) by confirming the cleaning liquid concentration in the channel.

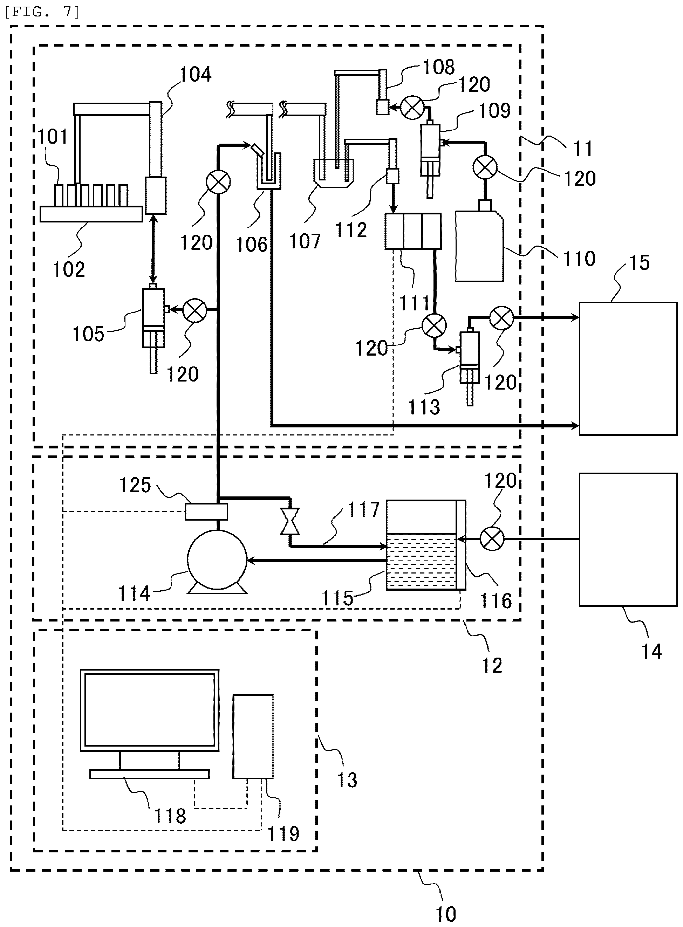

Fig. 7 exemplifies a configuration of the automatic analyzer 10 provided with a measurement unit 125 for measuring the cleaning liquid concentration in the channel from the water supply tank 115 to the analysis unit 11. Preferably, the measurement unit 125 is placed at a position in the channel from the water supply pump 114 to the analysis unit 11 upstream (outlet side of the water supply pump 114) from a point at which the channel is branched to the return channel 117, or a position in the channel between the water supply tank 115 and the water supply pump 114 to allow the measurement unit 125 to continuously monitor the cleaning liquid concentration of the liquid in the water supply tank 115. The measurement unit 125 measures, for example, conductivity or density of the liquid in the channel to determine the cleaning liquid concentration of the liquid in the channel.

The automatic analyzer 10 as illustrated in Fig. 7 allows the measurement unit 125 to continuously measure the cleaning liquid concentration in the channel during the channel cleaning maintenance, and to output the measurement results to the computing processing unit of the computer 118 via the controller 119. The computing processing unit of the computer 118 compares a predetermined cleaning liquid concentration which is stored in the recording unit with the cleaning liquid concentration output from the measurement unit 125. If the output cleaning liquid concentration is higher than the predetermined cleaning liquid concentration, the process continuously performs the operation of replacement with water (S9). If the output cleaning liquid concentration is lower than the predetermined cleaning liquid concentration, the process finishes the operation of replacement with water (S9), and the maintenance operation ends (S10).

This embodiment also allows optimization of the operation time for uniformizing the detergent concentration (S7). The recording unit of the computer 118 may be configured to preliminarily store a range of the cleaning liquid concentration after dilution, and to terminate the operation for uniformizing the detergent concentration when the concentration measured by the measurement unit 125 is in the specified range of the cleaning liquid concentration during the operation for uniformizing the cleaning liquid concentration (S7).

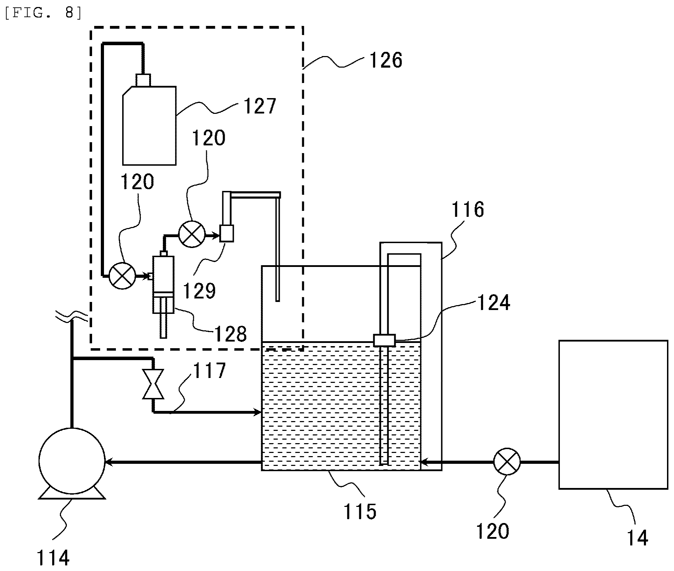

A detergent supply system 126 is added to the water supply tank 115 according to the second embodiment to further reduce the workload of the operator. Reduction in working hours, thus, can be expected. Fig. 8 exemplifies a configuration of the water supply unit 12 provided with the detergent supply system 126.

The detergent supply system 126 includes a detergent bottle 127, a detergent syringe 128, and a detergent nozzle 129. The computer 118 is capable of discharging a predetermined amount of detergent into the water supply tank 115 by controlling the detergent syringe 128 via the controller 119.

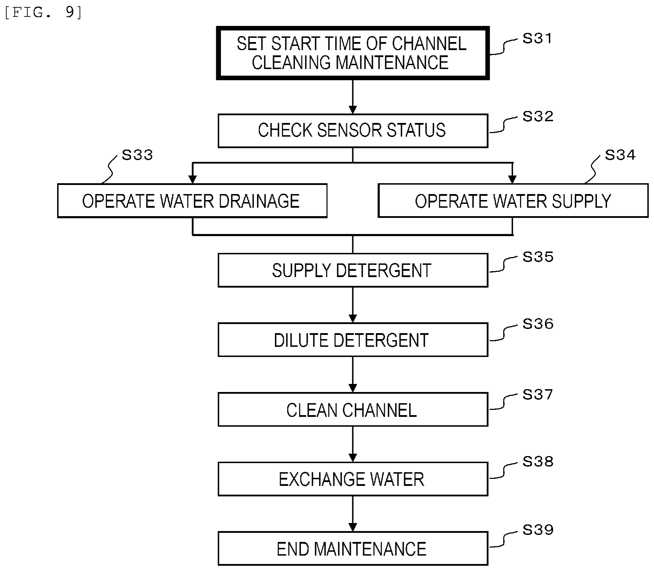

Fig. 9 shows an example of an operation flow of the channel cleaning maintenance using the detergent supply system 126 in the configuration according to the second embodiment.

The operator gives an instruction to perform the channel cleaning maintenance from the input unit of the computer 118 (S31). At this time, the operator can set the arbitrary timing to start the maintenance. For example, the maintenance timing can be set in the nighttime when the automatic analyzer 10 is kept in a non-working state.

When the set maintenance start timing is reached, the computer 118 checks the sensor status of the float type water level sensor 124 (S32). Like the operation flow in Fig. 6, in the case of excessive water volume in the water supply tank 115, water is drained until the float sensor reaches the predetermined water level (S33). In the case of deficiency in the water volume in the water supply tank 115, water is supplied to the water supply tank 115 until the float sensor reaches the predetermined water level (S34).

After adjusting the water volume in the water supply tank 115, a predetermined amount of detergent is supplied from the detergent supply system 126 to the water supply tank 115 (S35).

After that, the computer 118 activates the water supply pump 114. At this time, the water supply pump 114 supplies water in the state where all the solenoid valves 120 in the analysis unit 11 are closed. The detergent and water are circulated through the return channel 117 so that the detergent is automatically diluted, making the detergent concentration uniform (S36).

When confirming that the cleaning liquid concentration measured by the measurement unit 125 is in the specified range, the computer 118 opens the solenoid valves 120 that block channels connected from the water supply pump 114 to the sample probe 104, and from the water supply pump 114 to the nozzle cleaning mechanism 106. This allows the cleaning liquid to be supplied to the sample probe 104 and the nozzle cleaning mechanism 106 for cleaning the channel (S37). At this time, the sample probe 104 is placed at a position of the nozzle cleaning mechanism 106. The cleaning liquid supplied to the sample probe 104 and the nozzle cleaning mechanism 106 is discharged to the waste liquid equipment 15 through a waste liquid channel of the nozzle cleaning mechanism 106.

A liquid replacement operation for replacing the cleaning liquid with water in the channel is performed (S38). The computer 118 opens the solenoid valve 120 between the water supply equipment 14 and the water supply tank 115 to start water supply to the water supply tank 115. At this time, with reference to the sensor status of the float type water level sensor 124, if the water level is sufficient, water is not supplied by opening the solenoid valves 120. Only if the water level is not sufficient, the water is supplied by opening the solenoid valves 120.

When the cleaning liquid concentration measured by the measurement unit 125 becomes the specified concentration or lower, the computer 118 determines that the liquid in the channel has been replaced with water, stops water supply to the water supply tank 115, and displays the message "Completion of channel cleaning maintenance" on the display unit. The maintenance operation is then terminated (S39).

The detergent supply system 126 illustrated in Fig. 8 is an example that the detergent syringe 128 performs the quantitative supply of the detergent. The detergent supply method does not have to be of quantitative type so long as the cleaning liquid concentration can be automatically controlled. The cleaning liquid concentration can be adjusted to the appropriate concentration by performing operations as described below. A liquid supply system capable of supplying an appropriate amount of detergent is used to perform the detergent concentration uniformizing operation (S36) once. Then the measurement unit 125 measures the cleaning liquid concentration. If the measured cleaning liquid concentration is not in the specified range, water is supplied, or the detergent supply operation is performed again.

This embodiment exemplifies the measurement unit 125 provided in the channel of the water supply unit 12 for measuring the cleaning liquid concentration. The analysis unit 11 may be configured to measure the cleaning liquid. For example, if the detergent contains sodium hydroxide (NaOH), the analysis unit 11 detects Na⁺ ion so that the cleaning liquid concentration can be measured. For example, in step S36 or S38, the dilution operation or the replacement operation is performed for a predetermined period of time. Thereafter, the computer 118 places the sample probe 104 at a position of the dilution tank 107, and opens the solenoid valve 120 that blocks the channel connected from the water supply pump 114 to the sample probe 104. As the cleaning liquid is discharged into the dilution tank 107, the measurement probe 112 supplies the cleaning liquid in the dilution tank 107 to the electrode unit 111 for detecting the Na⁺ ion concentration. The computer 118 is capable of measuring the cleaning liquid concentration of the cleaning liquid taken out in the dilution tank 107 based on the Na⁺ ion concentration detected by the electrode unit 111.

The detergent supply system requires the operator only to operate the operation unit 13 for instructing the start of maintenance, and allows the remaining operations to be automatically performed. The system configured to allow setting of the start timing to a periodical predetermined timing no longer requires performance of the operation for every maintenance operation. This makes it possible to perform the automatic channel cleaning maintenance periodically.

The present invention is not limited to the above-described embodiments, and includes various modifications. For example, the above-described embodiments and modifications have been described in detail in order to facilitate the understanding of the present invention, and the present invention is not necessarily limited to those including all of the described configurations. In addition, part of the configuration of one embodiment and modification can be replaced with the configurations of other embodiments and modifications, and in addition, the configuration of the one embodiment can also be added with the configurations of other embodiments and modifications. In addition, part of the configuration of each of the embodiments can be subjected to addition, deletion, and replacement with respect to other configurations. List of Reference Signs

10: automatic analyzer,
11: analysis unit,
12: water supply unit,
13: operation unit,
14: water supply equipment,
15: waste liquid equipment,
101: blood collection tube (sample container),
102: sample disk (sample disk),
104 : probe (sample probe),
105: sample syringe pump,
106: nozzle cleaning mechanism,
107: dilution tank,
108: reagent probe,
109: reagent syringe pump,
110: reagent bottle,
111: electrode unit,
112: measurement probe,
113: measurement syringe pump,
114: water supply pump,
115: water supply tank,
116: water level monitoring unit,
117: return channel,
118: computer,
119: controller,
120: solenoid valve,
121: lower limit point sensor,
122: upper limit point sensor,
123: overflow sensor,
124: float type water level sensor,
125: measurement unit,
126: detergent supply system,
127: detergent bottle,
128: detergent syringe,
129: detergent nozzle

## Claims

1. An automatic analyzer comprising:
an analysis unit;
a water supply unit including a water supply tank, and a water supply pump for supplying a liquid held in the water supply tank to the analysis unit; and
a computer for controlling the analysis unit and the water supply unit, wherein
the water supply unit includes a return channel branched from the channel between the water supply pump and the analysis unit, and connected to the water supply tank; and
after detergent is put into the water supply tank, the computer mixes the water in the water supply tank with the detergent by blocking liquid supply from the channel to a mechanism of the analysis unit to return the liquid supplied from the water supply pump to the return channel to the water supply tank.

2. The automatic analyzer according to claim 1, wherein
the water supply unit includes a water level monitoring unit that monitors a liquid amount held in the water supply tank, and
the computer adjusts the liquid amount in the water supply tank based on a monitoring results of the liquid amount by the water level monitoring unit prior to the putting of detergent into the water supply tank.

3. The automatic analyzer according to claim 2, wherein
the water level monitoring unit includes a plurality of light transmission type sensors installed at different height positions of the water supply tank, or a float type water level sensor.

4. The automatic analyzer according to claim 2, wherein after mixing the water in the water supply tank and the detergent for a predetermined period of time, the computer sends a cleaning liquid obtained by mixing the water and the detergent and held in the water supply tank, from the channel to the mechanism of the analysis unit, and
the computer replaces the liquid in the channel with water from the cleaning liquid by starting water supply to the water supply tank based on the liquid amount of the cleaning liquid held in the water supply tank by the water level monitoring unit.

5. The automatic analyzer according to claim 4, wherein
the computer stops the water supply to the water supply tank after a predetermined time has elapsed since the water supply to the water supply tank was started.

6. The automatic analyzer according to claim 2, wherein
the computer starts sending a cleaning liquid held in the water supply tank from the channel to the mechanism of the analysis unit based on a cleaning liquid concentration of the cleaning liquid obtained by mixing the water and the detergent, and
the computer replaces the liquid in the channel with water from the cleaning liquid by starting water supply to the water supply tank based on the liquid amount of the cleaning liquid held in the water supply tank by the water level monitoring unit.

7. The automatic analyzer according to claim 6, wherein
the computer stops the water supply to the water supply tank based on the cleaning liquid concentration of the liquid in the channel.

8. The automatic analyzer according to claim 6, wherein
the water supply unit includes a measurement unit that measures the cleaning liquid concentration of the liquid in the channel.

9. The automatic analyzer according to claim 6, wherein
the analysis unit measures an ion concentration of a sample, and
the computer causes the analysis unit to measure anion concentration of the liquid within the channel, thereby measuring the cleaning liquid concentration of the liquid in the channel.

10. The automatic analyzer according to claim 2, wherein
the water supply unit includes a detergent supply system that puts a predetermined amount of the detergent into the water supply tank.

11. The automatic analyzer according to claim 10, wherein
the computer executes cleaning of the channel using the detergent at a timing designated in advance.

12. The automatic analyzer according to claim 1, wherein
the return channel is a return channel with an aperture, in which the aperture is provided in the middle of the return channel to reduce a diameter of the pipe.

13. The automatic analyzer according to claim 1, wherein
the mechanism of the analysis unit to which liquid is sent from the channel includes a sample probe for dispensing a sample and a nozzle cleaning mechanism for cleaning the sample probe.
